# EUROPÄISCHE PATENTANMELDUNG

(11) **EP 0 980 033 A1**
(43) Veröffentlichungstag der Anmeldung: **16.02.2000**
(21) Anmeldenummer: 99113637.5
(22) Anmeldetag: 13.07.1999
(51) Int. Cl.: G05B 19/042

(54) **Verfahren zur Inbetriebnahme eines Heizsystems mit mehreren Komponenten**

(30) Priorität: 11.08.1998 DE 19836350
(71) Anmelder: Viessmann Werke GmbH & Co, 35107 Allendorf (Eder) (DE)
(72) Erfinder: Ciliox, Andreas, 35713 Eschenburg (DE); Strieder, Harald, 35108 Allendorf (DE); Hankeln, Martin, 59955 Winterberg (DE); Hoffmann, Jörg, 35108 Allendorf (DE)
(74) Vertreter: Beetz & Partner Patentanwälte

(57) **Zusammenfassung**

Die Erfindung betrifft ein Verfahren zum Inbetriebnehmen eines Heizsystems mit einer Zentralsteuerung (1) und mehreren angeschlossenen Geräten (2, 3).

Um die Einrichtung einer Adresse der einzelnen Komponenten (2, 3), unter der sie von einer zentralen Steuerung (1) oder von anderen Komponenten (2, 3) über den gemeinsamen Bus (7) angesprochen werden können, effektiv und in möglichst kurzer Zeit zu ermöglichen, wird vorgeschlagen, die Schritte auszuführen: Einschalten der Stromversorgung (4) eines ersten Gerätes (2) durch die Zentralsteuerung (1), Übermitteln einer eingestellten Geräteadresse von dem Gerät (2) an die Zentralsteuerung (1) über den gemeinsamen Bus (7), Einschreiben einer neuen Geräteadresse in das Gerät (2) über den gemeinsamen Bus (7), wenn die Zentralsteuerung (1) einen Adreßkonflikt erkennt, Wiederholen der Schritte a) bis c) für alle Geräte (2).

## Beschreibung

Die Erfindung betrifft ein Verfahren zum Inbetriebnehmen eines Heizsystems mit einer Zentralsteuerung und mit mehreren Geräten, die von der Zentralsteuerung mit Energie versorgt werden und über einen gemeinsamen Bus gesteuert werden, wobei jedes Gerät eine eigene Adresse aufweist, das die Schritte aufweist: Anschließen jedes der Geräte an eine zentrale Stromversorgung, die von der Zentralsteuerung gesteuert wird, Anschließen jedes der Geräte an den gemeinsamen Bus.

Geräte, die an Bussystemen mit mehreren Teilnehmern angeschlossen sind, benötigen zur Identifizierung des einzelnen Gerätes eine sogenannte Adresse. Dies ist eine Nummer, die von der Breite des Busses abhängt und z.B. im Bereich von 0 bis 8 (3 Bit) oder von 0 bis 32 (5 Bit) liegt. Im Auslieferungszustand sind alle Geräte aus logistischen Gründen auf die gleiche Adresse eingestellt oder codiert. Werden nun mehrere Geräte an einem Bus betrieben, so darf eine Adresse jeweils nur bei einem Gerät vorhanden sein. Bei mehreren Geräten mit der gleichen Adresse an einem Bussystem entstehen Adreßkonflikte, die zu unkontrolliertem Verhalten führen.

Um dieses Problem zu vermeiden, müssen die Adressen der Geräte vor Anschluß an das Bussystem einzeln eingestellt werden. Dies kann durch manuelles Einstellen z. B. an DIP-Schaltern geschehen.

Aufgabe der vorliegenden Erfindung ist es, ein Verfahren zum Einrichten eines Heizsystems mit mehreren Komponenten, die wenigstens teilweise über einen gemeinsamen Bus angesprochen werden, anzugeben, mit dem die Einrichtung einer Adresse der einzelnen Komponenten, unter der sie von einer zentralen Steuerung oder von anderen Komponenten über den gemeinsamen Bus angesprochen werden können, effektiv und in möglichst kurzer Zeit erfolgen kann.

Diese Aufgabe wird gelöst durch das Verfahren mit den Merkmalen nach Anspruch 1. Eine bevorzugte Ausführungsform der Erfindung ist Gegenstand des Unteranspruchs.

Die erfindungsgemäße Lösung beruht darauf, daß man die Netzversorgung z.B. der mehreren drehzahlgeregelten Heizkreispumpen über jeweils ein Relais anschließt, das von einer Zentralsteuereung direkt ansteuerbar ist, und zusätzlich die Heizkreispumpen an den Bus anschaltet. Die Zentralsteuerung arbeitet ein Steuerprogramm ab, bei dem nach dem erstmaligen Einschalten zunächst die mit dem Bus verbundenen Geräte einzeln nacheinander über ihr jeweiliges Relais eingeschaltet werden und von sich aus ein Anmeldesignal auf dem Bus ausgeben (aktiver Grundzustand) oder auf ein Ansprechsignal auf dem Bus warten (passiver Grundzustand). Wenn sich ein Gerät meldet, so kann es nach Belieben adressiert und insbesondere dem Heizkreis zugeordnet werden. Dies geschieht nacheinander automatisch für alle Geräte bzw. Heizkreispumpen. Ist die Heizkreispumpe z.B. als drehzahlgeregelte Pumpe am Bus erkannt worden, so wird nach Abschluß der Initialisierungsprozedur das jeweils zugehörige Relais dauernd eingeschaltet und die eigentliche Steuerung des Gerätes, d.h. Ein- und Ausschalten sowie die Wahl von Parametern wie Drehzahl etc. erfolgt ab dann ausschließlich über Steuerbefehle auf dem Bus. Erfolgt keine Meldung des Gerätes auf dem Bus von sich aus und auch keine Antwort auf eine Abfrage durch die Zentralsteuerung nach Einschalten eines Relais, so wird dieses Gerät als Gerät erkannt, das nur ein- und ausgeschaltet werden kann, und das entsprechende Gerät wird (wenn vorhanden) auf herkömmliche Weise über das Relais geschaltet.

Das erfindungsgmäße Verfahren zum Inbetriebnehmen eines Heizsystems mit einer Zentralsteuerung und mit mehreren Geräten, die von der Zentralsteuerung mit Energie versorgt werden und über einen gemeinsamen Bus gesteuert werden, wobei jedes Gerät eine eigene, überschreibbare Adresse aufweist, das die Schritte aufweist: Anschließen jedes der Geräte an eine zentrale Stromversorgung, die von der Zentralsteuerung gesteuert wird, und Anschließen jedes der Geräte an den gemeinsamen Bus ist gekennzeichnet die Schritte:
a) Einschalten der Stromversorgung eines ersten Gerätes durch die Zentralsteuerung,
b) Übermitteln einer eingestellten Geräteadresse von dem Gerät an die Zentralsteuerung über den gemeinsamen Bus,
c) Einschreiben einer neuen Geräteadresse in das Gerät über den gemeinsamen Bus, wenn die Zentralsteuerung einen Adreßkonflikt erkennt,
d) Wiederholen der Schritte a) bis c) für alle Geräte.

Vorzugsweise werden vor Schritt d) alle Stromversorgungen ausgeschaltet.

Ein Vorteil der Erfindung liegt darin, daß bei einer Heizungsregelung mit mehreren Heizkreisen mehrere (unterschiedliche) Heizkreispumpen angeschlossen werden können. Insbesondere können herkömmliche Heizkreispumpen über Relaiskontakte angeschlossen und geschaltet werden. Es können aber genauso gut drehzahlgeregelte Heizkreispumpen über einen Bus angeschlossen und geschaltet sowie individuell drehzahlgesteuert werden. In beiden Fällen werden die Geräte von der Zentralsteuerung korrekt erkannt und können je nach ihrer Funktion über den Bus angesteuert werden.

Weitere Vorteile und Merkmale der Erfindung ergeben sich aus der folgenden Beschreibung eines zeichnerisch dargestellten Ausführungsbeispiels.
- Fig. 1: zeigt eine Systemübersicht eines Heizsystems mit einem Kommunikationsbus, auf das die vorliegende Erfindung Anwendung findet.
- Fig. 2: zeigt die hierarchische Organisation der Komponenten in dem Bussystem.

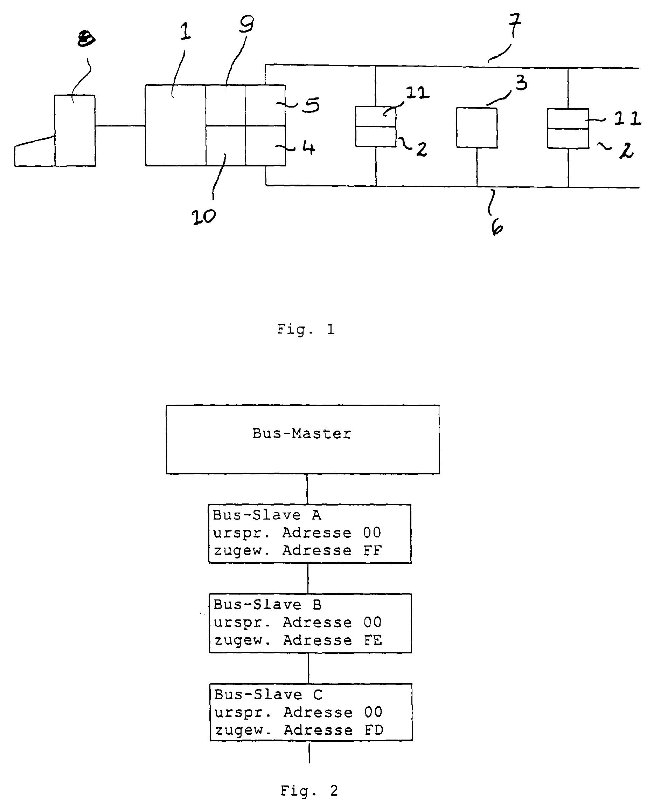

In Fig. 1 ist ein Heizsystem dargestellt, auf das die Erfindung Anwendung finden kann. Das System umfaßt eine Systemsteuerung 1, über die die Steuerung bzw. Abfrage von Komponenten 2 und 3 wie Brenner, Pumpen und Meßfühler in einem Heizsystem vorgenommen wird. Die Zentralsteuerung 1 ist mit einer Benutzer-Schnittstelle 8 verbunden, die über eine Konsole verfügt, über die der Benutzer Befehle an die Steuerung 1 des Heizsystems abschicken kann. Die Konsole kann dabei eine übliche Computer-Tastatur umfassen oder fest verdrahtete Schalter mit jeweils nur einer spezifischen Funktion.

Die Steuerung 1 dient sowohl zur Versorgung von einzelnen Komponenten 2 und 3 mit Strom über Versorgungsleitungen 6 als auch zur Ansteuerung wenigstens einiger der Komponenten 2 und 3 in dem Heizsystem über einen eigenen Kommunikationsbus 7. Für die Stromversorgung der Geräte über die Versorgungsleitungen 6 umfaßt die Steuerung 1 eine eigene Stromversorgung 10. Von der Steuerung 1 werden damit alle Geräte, d.h. sowohl die Komponenten 2 als auch 3 im Heizsystem mit Strom versorgt. Dabei ist es möglich, daß über die Steuerung 1 durch den Benutzer einzelne Geräte 2 und 3 gezielt mit Strom versorgt werden oder von der Stromversorgung abgekoppelt werden. D.h. die in Fig. 1 mit 6 bezeichnete Linie stellt tatsächlich zweimal oder dreimal soviele Versorgungsleitungen wie angeschlossene Geräte 2 und 3 dar, wobei jeweils ein Paar oder drei Versorgungsleitungen an einem Gerät 2 oder 3 endet. Die Versorgungsleitungen 6 können dann z.B. über Relaisschalter in der Stromversorgung 4 der Steuerung 1 mit Anschlüssen für Netzstrom oder Drehstrom verbunden werden.

In einem Heizsystem nach dem Stand der Technik kann so über das Ein- und Ausschalten der Stromzufuhr von einzelnen Geräten z.B. eine Umwälzpumpe in dem Heizsystem gezielt aktiviert werden. Die Pumpe würde nach dem Einschalten und einer gewissen Anlaufphase dann aber mit einer vorgegebenen Drehzahl arbeiten, ohne daß der Benutzer des Heizsystems die Möglichkeit hätte, regulierend einzugreifen: er kann die Pumpe nur ein- oder ausschalten.

Bei moderneren Systemen ist daher zusätzlich zu den Versorgungsleitungen 6 von der Steuerung 1 zu den Geräten 2 und 3 ein Kommunikationsbus mit Busleitungen 7 vorgesehen. Die Steuerung 1 gibt über eine interne Bus-Schnittstelle 5 auf den Bus 7 Befehle an die einzelnen Geräte 2 aus bzw. liest von diesen Statusinformationen ein. Der Benutzer kann durch Eingabe über die Benutzer-Schnittstelle 8 die Leistung einzelner Komponenten 2 und 3 auch graduell einstellen bzw. gezielt Parameter wie die Drehzahl etc. der Komponenten vorgeben, indem er Befehle über die Steuerung 1, die Bus-Schnittstelle 5 und den Bus 7 an einzelne Geräte 2 abschickt.

Die Art des Kommunikationsbusses, d.h. das Protokoll des Busses ist dabei nicht entscheidend: das Bus-System kann ein EIB-System, ein Interbus, ein Profibus oder ein sonstiger Feldbus sein. Ebenso können die oder einige der Geräte 2 an dem Kommunikationsbus 7 einen aktiven Kornmunikationsmodus oder einen passiven Kommunikationsmodus haben. In dem aktiven Kommunikationsmodus geben sie ihre Adresse und evtl. weitere Statusmeldungen auf dem Bus 7 aus, sobald sie an die Stromversorgung angeschlossen sind. In dem passiven Kommunikationsmodus senden sie ihre Adresse und weitere Statusmeldungen nur auf Aufforderung durch den Bus-Master ab. Dabei ist der Bus vorzugsweise ein paralleler Bus, der in Adressenleitungen und Datenleitungen unterteilt ist.

Es ist möglich, daß nur einige der Komponenten gleichzeitig mit den Versorgungsleitungen 6 für die Stromzufuhr und mit dem gemeinsamen Kommunikationsbus 7 verbunden sind. Die Komponenten, die sowohl mit den Versorgungsleitungen 6 von der Steuerung 1 als auch mit dem Kommunikationsbus 7 verbunden sind, sind mit 2 bezeichnet. Die übrigen Komponenten, also diejenigen, die nur eine Stromversorgung benötigen, sind mit 3 bezeichnet.

Jedes Gerät 2, das dazu geeignet ist, über einen Kommunikationsbus 7 angesteuert zu werden, ist mit einem Adreßspeicher 11 versehen, in dem seine Adresse auf dem Bus abgelegt ist. Dieser Speicher ist nicht ein ROM-Speicher sondern ein beschreibbarer Speicher, so daß ein Wert, der in ihm abgelegt wurde, überschreibbar ist.

Wird eine Nachricht über den Bus versendet, sei es von der Steuerung 1 oder einem der Geräte 2, dann enthält in einer Ausführungsform der Erfindung die Nachricht mindestens drei Blöcken mit i.a. unterschiedlich vielen Bits oder Bytes. In einem dieser Blöcke ist die Adresse des Senders abgelegt, in einem weiteren Block der Nachricht ist die Adresse des Empfängers abgelegt, und in einem dritten Block ist die eigentliche Nachricht mit Statusinformationen oder Befehlen enthalten. Jedes der Geräte 2 an dem Bus liest die Nachricht und vergleicht dabei zunächst die Empfängeradresse mit der eigenen Adresse, die in dem geräteeigenem Speicher 11 abgelegt ist. Stimmt die Adresse in der Nachricht mit der Adresse in dem Speicher 11 überein, so ist die Nachricht für dieses Gerät bestimmt, und das Gerät beginnt mit der Dekodierung des Inhalts des dritten Blocks der Nachricht. In dem anderen Fall ist die Nachricht nicht für das Gerät bestimmt, das Gerät ignoriert den Inhalt der Nachricht und kehrt in einen Wartezustand zurück, in dem es die über den Bus ausgetauschten Nachrichten überwacht.

Das Problem beim Stand der Technik ist jedoch, daß die Adresse in dem jeweiligen Speicher 11 jedoch bei der Installation eines Gerätes 2 in dem Heizsystem - u.U. per Hand - eingestellt werden muß, was insbesondere dann sehr aufwendig ist, wenn sich die Komponenten 2 und 3 über ein großes Areal verteilen.

Erfindungsgemäß umfaßt die Steuerung 1 daher einen Programmspeicher 9 und einen Speicher für eine Adreßverwaltung. In dieser Adreßverwaltungstabelle 10 sind alle von der Steuerung 1 ansprechbaren Adressen abgelegt.

Erfindungsgemäß werden bei der Installierung eines neuen Heizsystems zunächst alle Komponenten 2 und 3 mit den Versorgungsleitungen 6 von der Stromversorgung 4 der Steuerung 1 für die Geräte verbunden. Ein Einschalten der Stromversorgung erfolgt aber noch nicht.

Ferner werden die Komponenten 2, die dafür ausgelegt sind, mit dem Kommunikationsbus 7 verbunden. Solange die Komponenten 2 nicht mit Strom versorgt werden, erfolgt ihrerseits auch keine Meldung auf dem Bus. Das erfindungsgemäße Verfahren zum Inbetriebnehmen eines Heizsystems sieht nach dem Anschließen jedes der Geräte 2 an die zentrale Stromversorgung 4, die von der Zentralsteuerung 1 gesteuert wird, und dem Anschließen jedes der Geräte 2 an den gemeinsamen Bus 7 die Schritte vor, daß die Stromversorgung 4 eines ersten Gerätes 2 durch die Zentralsteuerung 1 eingeschaltet wird. Erst danach kann das angeschlossene erste Gerät 2 sich auf dem Bus 7 melden, wenn es ein Gerät mit aktivem Kommunikationsmodus ist. Ist es dagegen ein Gerät mit passivem Kommunikationsmodus, so meldet es sich nach Einschalten der Stromversorgung nur nach Aufforderung durch die Steuerung 1.

In jedem Fall wird eine eingestellte Geräteadresse von dem Gerät 2 an die Zentralsteuerung 1 über den gemeinsamen Bus 7 übermittelt.

Die Steuerung 1 prüft in ihrer Adreßverwaltungstabelle 10, ob die Adresse zulässig ist. D.h. die Steuerung prüft, ob die Adresse in einem vorher zugewiesenen Adreßraum liegt oder nicht. So kann die Adresse des Gerätes z.B. in einem Wertebereich liegen, der für bestimmte Zwecke reserviert ist. Dieser Wertebereich kann dadurch gekennzeichnet sein, daß das erste Bit der Adresse den Wert 1 hat. In diesem Fall weist die Steuerung 1 dem Gerät eine Adresse zu, die mit einem oder mehreren Bit mit dem Wert 0 beginnt. Ebenso kann es sein, daß - falls das gerade eingeschaltete Gerät 2 nicht das erste Gerät ist - die Adresse, die in dem geräteinternen Speicher 11 ursprünglich abgelegt wurde, bereits vergeben ist. Die Steuerung 1 erkennt dies dadurch, daß sie die Adresse des gerade eingeschalteten Gerätes mit allen bisher vergebenen Adressen in der Adreßverwaltungstabelle 10 vergleicht. Stellt die Steuerung tatsächlich einen Adreßkonflikt fest, nämlich daß die Adresse bereits vergeben wurde, muß die Steuerung 1 in den Speicher 11 des gerade eingeschalteten Gerätes eine neue Adresse einschreiben.

Diese Schritte werden sukzessive für alle Geräte 2 wiederholt, so daß am Ende dieser Prozedur jedes Gerät eine eigene, eindeutig zugeordnete Adresse hat. Die Ablaufsteuerung erfolgt dabei über ein Programm, das von der Steuerung 1 abgearbeitet wird und das in einem Programmspeicher 9 in der Steuerung 1 abgelegt ist. Programmspeicher 9 und Steuerung 1 lassen sich insbesondere als Computersystem installieren, es kann aber auch eine fest verdrahtete Schaltung dazu verwendet werden.

Ein weiterer Vorteil der vorliegenden Erfindung besteht darin, daß für den Fall, daß im Verlauf der obigen Prozedur festgestellt wird, daß eines oder mehrere der Geräte 2 einen Nur-Lese-Speicher 11 hat, dann die Prozedur unterbrochen wird und unmittelbar von vorne beginnt, wobei den Geräten 2 mit Nur-Lese-Speicher von vornherein eine feste Adresse zugeordnet wird. Dies ist natürlich nicht nur bei einer Erstinstallation eines Heizsystems sondern auch bei dem nachträglichen Einbau von Komponenten 2 in den Heizkreis möglich.

Zur Verdeutlichung des Ablaufs des Verfahrens ist die hierarchische Ordnung des Bussystems in Fig. 2 dargestellt. Hierarchisch wird bei dem Bussystem nach Fig. 1 zwischen einem Master und mehreren Slaves unterschieden. Die Rolle des Masters spielt hier die Steuerung 1, die Slaves sind die Geräte 2. Die Geräte 3 in Fig. 1, die keinen Anschluß an den Kommunikationsbus 7 haben, sind in der Darstellung des Busses in Fig. 2 nicht mit aufgenommen.

Der Master überwacht die Kommunikation auf dem Bus, der hierarchisch organisiert ist, d.h. der Master gibt Steuersignale aus, und die Slaves empfangen Steuerbefehle und können vorzugsweise Statusinformationen auf den Bus ausgeben.

Die ursprüngliche Adresse des Bus-Slave A im Register 11 hat z.B. den Wert 00 in hexadezimaler Darstellung. Mit dieser Adresse meldet sich der Bus-Slave A auf dem Bus, wenn er eingeschaltet wird. Wenn wie oben beschrieben die Steuerung 1 dieselbe Adresse bereits in der Adreßverwaltungstabelle 10 findet, so ersetzt sie die Adresse in dem Register 11 im Gerät 2, das gerade eingeschaltet ist, durch eine neue Adresse, die in der Steuerung 1 generiert wird. Dazu kann die Steuerung 1 einen (nicht dargestellten) Aufwärts- und/oder Abwärts-Zähler umfassen, der bei jedem neu eingeschaltetem Gerät 2 eine neue Adresse generiert. Wird die generierte Adresse nicht benötigt, da das eingeschaltete Gerät eine Adresse hat, die zulässig ist, bleibt der Zähler auf dem Wert stehen. Die Adresse des Gerätes 2 wird in die Tabelle 10 aufgenommen, und das nächste Gerät 2 wird eingeschaltet. Hat dieses Gerät 2 einen nicht zulässigen Wert als Adresse, so wird der Wert des Zählers in den Speicher 11 des gerade eingeschalteten Gerätes 2 eingeschrieben, und der Zähler erzeugt einen nächsten Wert für eine Adresse.

In Fig. 2 ist der Zähler ein Abwärtszähler. Der Bus-Slave A hat den ursprünglichen Adressenwert 00. Dieser sei reserviert oder aus anderen Gründen nicht zulässig. Daher wird an seiner Stelle der Wert FF in den geräteinternen Speicher 11 eingeschrieben.

Des gleichen hat der Bus-Slave B ursprünglich den Adressenwert 00. Dieser wird durch den nächsten Zählerwert FE ersetzt. Entpsrechend wird der Adressenwert des Bus-Slaves C durch FD ersetzt, usw..

Bei dem Wiederholen der obigen Schritte kann entweder die Stromversorgung der bereits überprüften Geräte 2 abgeschaltet werden, oder es kann immer ein Gerät hinzukommen. Es ist besser, die Stromversorgung für alle Geräte bis auf das zu prüfende abzuschalten, damit so vermieden wird, daß es zu Kollisionen auf dem Bus kommt, wenn ein Gerät zusätzlich eingeschaltet wird. Nur wenn sichergestellt sit, daß es prinzipiell nicht zu einer Koinzidenz von Adressen kommen kann, können die bereits geprüften Geräte 2 am Bus eingeschaltet bleiben, wenn ein neues hinzukommt.

### Liste der Bezugszeichen

- 1: Zentralsteuerung
- 2: Gerät mit Busanschluß
- 3: Gerät ohne Busanschluß
- 4: Stromversorgung für Geräte
- 5: Schnittstelle für Bus, logische Steuerung
- 6: Versorgungsleitung
- 7: Busleitung
- 8: Benutzer-Schnittstelle
- 9: Programmspeicher in Zentralsteuerung
- 10: Adreßverwaltungstabelle in Zentralsteuerung
- 11: Adreßspeicher in Gerät

## Patentansprüche

1. Verfahren zum Inbetriebnehmen eines Heizsystems für ein Gebäude mit einer Zentralsteuerung (1) und mit mehreren Geräten (2, 3) insbesondere Brenner, Umwälzpumpe und Meßfühler, die von der Zentralsteuerung (1) mit Energie versorgt werden und über einen gemeinsamen Bus (7) gesteuert werden, wobei jedes Gerät (2) eine eigene Adresse aufweist, das die Schritte aufweist: Anschließen jedes der Geräte (2, 3) an eine zentrale Stromversorgung (4), die von der Zentralsteuerung (1) gesteuert wird,
Anschließen jedes der Geräte (2) an den gemeinsamen Bus (7),
**gekennzeichnet durch** die Schritte:
a) Einschalten der Stromversorgung (4) eines ersten Gerätes (2) durch die Zentralsteuerung (1),
b) Übermitteln einer eingestellten Geräteadresse von dem Gerät (2) an die Zentralsteuerung (1) über den gemeinsamen Bus (7),
c) Einschreiben einer neuen Geräteadresse in das Gerät (2) über den gemeinsamen Bus (7), wenn die Zentralsteuerung (1) einen Adreßkonflikt erkennt,
d) Wiederholen der Schritte a) bis c) für alle Geräte (2)

2. Verfahren nach Anspruch 1,
**dadurch gekennzeichnet**, daß vor Schritt d) alle Stromversorgungen ausgeschaltet werden.
